# EUROPEAN PATENT APPLICATION

(11) **EP 3 396 321 A2**
(43) Date of publication of application: **31.10.2018**
(21) Application number: 18165723.0
(22) Date of filing: 04.04.2018
(51) Int. Cl.: G01C 21/34, G01C 21/36, G05D 1/00, G05D 1/02

(54) **ROUTE-PLANNING SYSTEM**

(30) Priority: 18.04.2017 US 201715490315
(71) Applicant: Delphi Technologies LLC, Troy, MI 48007 (US)
(72) Inventor: CASHLER, Robert J., Kokomo, INA 46902 (US); CHIA, Michael I., Cicero, IN 46034 (US)
(74) Representative: Robert, Vincent

(57) **Abstract**

A route-planning system (10) includes a digital-map (30) and a controller (28). The digital-map (30) is used to define a travel-route (32) of a host-vehicle (12) traveling to a destination. The digital-map (30) identifies a plurality of fueling-stations (34) along the travel-route (32). The controller (28) is in communication with the digital-map (30). The controller (28) determines a fuel-range (36) of the host-vehicle (12). When an operator (16) of the host-vehicle (12) causes the host-vehicle (12) to deviate from the travel-route (32) and the fuel-range (36) is less than a fuel-range-threshold (38), the controller (28) notifies (40) the operator (16) of the host-vehicle (12) of a fueling-station (34) available to refuel the host-vehicle (12). The available fueling-station (34) is based on the fuel-range (36) and a distance (44) to the fueling-station (34) when the distance (44) is less than a route-deviation-threshold (46). The controller (28) then drives the host-vehicle (12) to the fueling-station (34) when the operator (16) selects the fueling-station (34).

## Description

### TECHNICAL FIELD OF INVENTION

This disclosure generally relates to a route planning system, and more particularly relates to a route planning system that overrides a destination of an automated vehicle.

### BACKGROUND OF INVENTION

It is known for an automated vehicle to drive to a predetermined destination. Overriding the destination in a narrow time window to execute the deviation may be difficult and frustrating for an operator of the automated vehicle.

### SUMMARY OF THE INVENTION

In accordance with one embodiment, a route-planning system suitable for use on an automated vehicle is provided. The route-planning system includes a digital-map and a controller. The digital-map is used to define a travel-route of a host-vehicle traveling to a destination. The digital-map identifies a plurality of fueling-stations along the travel-route. The controller is in communication with the digital-map. The controller determines a fuel-range of the host-vehicle. When an operator of the host-vehicle causes the host-vehicle to deviate from the travel-route and the fuel-range is less than a fuel-range-threshold, the controller notifies the operator of the host-vehicle of a fueling-station available to refuel the host-vehicle. The available fueling-station is based on the fuel-range and a distance to the fueling-station when the distance is less than a route-deviation-threshold. The controller then drives the host-vehicle to the fueling-station when the operator selects the fueling-station.

The controller may further include an internet-transceiver that updates the digital-map with fueling-station-information and prioritizes the fueling-stations at which to refuel the host-vehicle based on a fuel-price. The controller may further include an internet-transceiver that updates the digital-map with fueling-station-information and prioritizes the fueling-stations at which to refuel the host-vehicle based on a fuel-type-availability. The controller may include a voice-recognition-device and the operator selects the fueling-station using a verbal-command.

In accordance with another embodiment, a route-planning system suitable for use on an automated vehicle is provided. The route-planning system includes a digital-map and a controller. The digital-map is used to define a travel-route of a host-vehicle traveling to a destination. The digital-map identifies a plurality of stop-facilities along the travel-route. The controller is in communication with the digital-map. The controller determines a continuous-travel-time of the host-vehicle. When an operator of the host-vehicle causes the host-vehicle to deviate from the travel-route and the continuous-travel-time is greater than a continuous-time-threshold, the controller notifies an occupant of the host-vehicle of available stop-facilities. The controller determines the available stop-facilities based on a distance to the stop-facility when the distance is less than a route-deviation-threshold. The controller then drives the host-vehicle to the stop-facility when the occupant selects the stop-facility.

The controller may further include an internet-transceiver that updates the digital-map with stop-facility-information and prioritizes the stop-facilities at which to stop the host-vehicle based on a restaurant-availability. The controller may further include an internet-transceiver that updates the digital-map with stop-facility-information and prioritizes the stop-facilities at which to stop the host-vehicle based on restroom-availability. The controller may include a voice-recognition-device and the occupant selects the stop-facility using a verbal-command.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a route-planning system in accordance with one embodiment;
Fig. 2 is a diagram of a route-planning system in accordance with another embodiment; and
Fig. 3 is a flow-chart of an operation of the systems of Figs. 1 and 2 in accordance with one embodiment.

The reference numbers of similar elements in the embodiments shown in the various figures share the last two digits.

### DETAILED DESCRIPTION

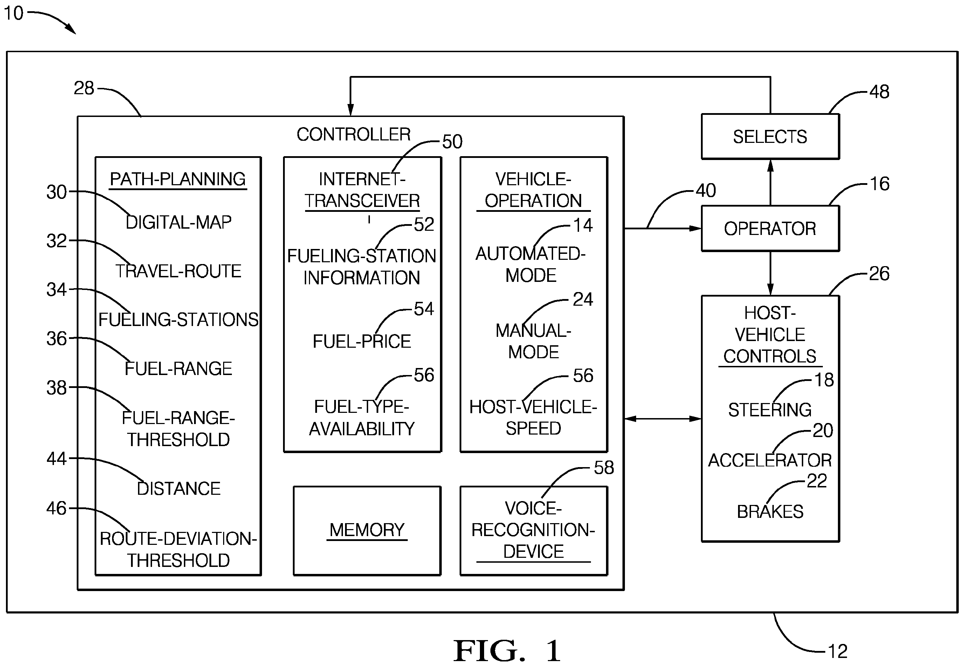

Fig. 1 illustrates a non-limiting example of a vehicle-control system 10, hereafter referred to as the system 10, suitable for use on an automated vehicle, hereafter referred to as the host-vehicle 12. In general, the system 10 is configured to operate (i.e. drive) the host-vehicle 12 in an automated-mode 14 whereby an operator 16 of the host-vehicle 12 is little more than a passenger. That is, the operator 16 is not substantively involved with a steering 18 or operation of an accelerator 20 and brakes 22 of the host-vehicle 12. It is contemplated that the host-vehicle 12 may also be operated in a manual-mode 24 where the operator 16 is fully responsible for operating host-vehicle-controls 26, or in a partial-mode (not shown) where control of the host-vehicle 12 is shared by the operator 16 and a controller 28 of the system 10.

The system 10 includes a digital-map 30 in communication with the controller 28. The digital-map 30 may be used to define a travel-route 32 of the host-vehicle 12 traveling to a destination. The digital-map 30 may identify a plurality of fueling-stations 34 along the travel-route 32. The fueling-stations 34 may provide any fuel known to provide a source of energy to propel the host-vehicle 12, including, but not limited to, hydrocarbon-based fuels, hydrogen-based fuels, electricity for charging a battery, and exchangeable battery-packs. The fuels may be in a liquid-state, a gaseous-state, and a solid-state. The digital-map 30 may be located on-board the host-vehicle 12 and may be integrated into the controller 28. The digital-map 30 may be stored 'in the cloud' and accessed via a transceiver (e.g. Wi-Fi, cellular, satellite - not shown). The digital-map 30 and transceiver may also be part of a location-device (e.g. GPS - not shown).

The system 10 includes the controller 28 in communication with the digital-map 30. The controller 28 may determine a fuel-range 36 of the host-vehicle 12 by any of the methods know to one in the art. When the operator 16 of the host-vehicle 12 causes the host-vehicle 12 to deviate from the travel-route 32 and the fuel-range 36 is less than a fuel-range-threshold 38, the controller 28 notifies 40 the operator 16 of the host-vehicle 12 of the fueling-station 34 available to refuel (not shown) the host-vehicle 12. The controller 28 may determine the available fueling-station 34 based on the fuel-range 36 and a distance 44 to the fueling-station 34 when the distance 44 is less than a route-deviation-threshold 46. The route-deviation-threshold 46 may be selected by the operator 16 to meet the individual needs of the operator 16. The controller 28 may then drive the host-vehicle 12 to the fueling-station 34 when the operator 16 selects 48 the fueling-station 34.

As used herein, the fuel-range 36 is defined as the distance 44 the host-vehicle 12 may travel based on the host-vehicle's 12 remaining fuel. The fuel-range-threshold 38 preferably corresponds to the distance 44 that is less than the fuel-range 36, including a margin of safety, so that the host-vehicle 12 does not exhaust all the remaining fuel traveling to the fueling-station 34.

The operator 16 may cause the host-vehicle 12 to deviate from the travel-route 32 by any method, including, but not limited to, adjusting the steering 18 by turning a hand-wheel, actuating the brakes 22, activating a turn-signal, and activating the accelerator 20.

The controller 28 may include a processor (not shown) such as a microprocessor or other control circuitry such as analog and/or digital control circuitry including an application specific integrated circuit (ASIC) for processing data as should be evident to those in the art. The controller 28 may include a memory (not specifically shown), including non-volatile-memory, such as electrically erasable programmable read-only-memory (EEPROM) for storing one or more routines, thresholds, and captured data. The one or more routines may be executed by the processor to perform steps for operating the host-vehicle 12 based on signals received by the controller 28 as described herein.

The controller 28 may also include an internet-transceiver 50 that updates the digital-map 30 with fueling-station-information 52 and prioritizes the fueling-stations 34 at which to refuel the host-vehicle 12 based on a fuel-price 54. The internet-transceiver 50 may be any internet-transceiver 50 suitable for automotive applications and may include Wi-Fi, cellular, and satellite devices (not shown). Preferably, the fueling-stations 34 with a lower fuel-price 54 would be provided to the operator 16 with a higher priority.

The controller 28 may also include the internet-transceiver 50 that updates the digital-map 30 with fueling-station-information 52 and prioritizes the fueling-stations 34 at which to refuel the host-vehicle 12 based on a fuel-type-availability 56. As mentioned previously, the fuel may be any fuel known to provide the energy to propel the host-vehicle 12, including, but not limited to, hydrocarbon-based fuels, hydrogen-based fuels, electricity for charging a battery, and exchangeable battery-packs. The fuels may be in the liquid-state, the gaseous-state, and the solid-state. The controller 28 may be programmed with the fuel-type requirements for the host-vehicle 12 in order to prioritize the fuel-type-availability 56.

The controller 28 may also include a voice-recognition-device 58 and the operator 16 selects 48 the fueling-station 34 using a verbal-command 60. The voice-recognition-device 58 may be any of the known voice-recognition-devices 58 suitable for automotive applications.

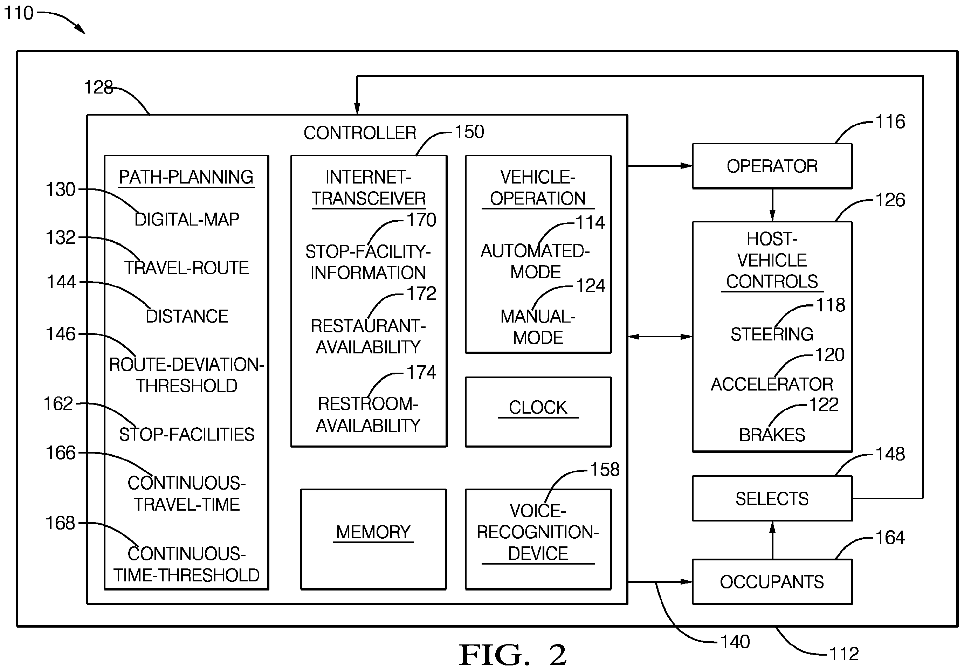

Fig. 2 illustrates a non-limiting example of another embodiment of a vehicle-control system 110, hereafter referred to as the system 110, suitable for use on an automated vehicle, hereafter referred to as the host-vehicle 112. In general, the system 110 is configured to operate (i.e. drive) the host-vehicle 112 in an automated-mode 114 whereby an operator 116 of the host-vehicle 112 is little more than a passenger. That is, the operator 116 is not substantively involved with a steering 118 or operation of an accelerator 120 and brakes 122 of the host-vehicle 112. It is contemplated that the host-vehicle 112 may also be operated in a manual-mode 124 where the operator 116 is fully responsible for operating host-vehicle-controls 126, or in a partial-mode (not shown) where control of the host-vehicle 112 is shared by the operator 116 and a controller 128 of the system 110.

The system 110 includes a digital-map 130 in communication with the controller 128. The digital-map 130 may be used to define a travel-route 132 of the host-vehicle 112 traveling to a destination. The digital-map 130 may identify a plurality of stop-facilities 162 along the travel-route 132. The stop-facilities 162 may provide food and a place for the operator 116 and/or the occupants 164 of the host-vehicle 112 to rest. The digital-map 130 may be located on-board the host-vehicle 112 and may be integrated into the controller 128. The digital-map 130 may be stored 'in the cloud' and accessed via a transceiver (e.g. Wi-Fi, cellular, satellite - not shown). The digital-map 130 and transceiver may also be part of a location-device (e.g. GPS - not shown).

The system 110 includes the controller 128 in communication with the digital-map 130. The controller 128 may determine a continuous-travel-time 166 of the host-vehicle 112 by any of the methods know to one in the art, such as a clock (not specifically shown) or a timer (not shown), for example. When the operator 116 of the host-vehicle 112 causes the host-vehicle 112 to deviate from the travel-route 132 and the continuous-travel-time 166 is greater than a continuous-time-threshold 168, the controller 128 notifies 140 the occupants 164 of the host-vehicle 112 of the stop-facilities 162 available to stop the host-vehicle 112. The continuous-time-threshold 168 may be determined by the occupants 164 to meet their specific needs. It will be recognized that operator 116 is also considered the occupant 164 of the host vehicle 112 and may also receive the notification 140 from the controller 128. The controller 128 may determine the available stop-facilities 162 based on a distance 144 to the stop-facility 162 when the distance 144 is less than a route-deviation-threshold 146. The route-deviation-threshold 146 may be determined by the operator 116 and/or the occupants 164 to meet the needs of the operator 116 and/or occupants 164 of the host-vehicle 112. The controller 128 may then drive the host-vehicle 112 to the stop-facility 162 when the occupants 164 select 148 the stop-facility 162.

The operator 116 may cause the host-vehicle 112 to deviate from the travel-route 132 by any method, including, but not limited to, adjusting the steering 118 by turning a hand-wheel, actuating the brakes 122, activating a turn-signal, and activating the accelerator 120.

The controller 128 may include a processor (not shown) such as a microprocessor or other control circuitry such as analog and/or digital control circuitry including an application specific integrated circuit (ASIC) for processing data as should be evident to those in the art. The controller 128 may include a memory (not specifically shown), including non-volatile-memory, such as electrically erasable programmable read-only-memory (EEPROM) for storing one or more routines, thresholds, and captured data. The one or more routines may be executed by the processor to perform steps for operating the host-vehicle 112 based on signals received by the controller 128 as described herein.

The controller 128 may also include an internet-transceiver 150 that updates the digital-map 130 with stop-facility-information 170 and prioritizes the stop-facilities 162 at which to stop the host-vehicle 112 based on a restaurant-availability 172. The internet-transceiver 150 may be any internet-transceiver 150 suitable for automotive applications and may include Wi-Fi, cellular, and satellite devices (not shown). Preferably, the stop-facilities 162 with restaurant-availability 172 that are suitable to the occupants 164 of the host-vehicle 112 would be provided to the occupants 164 with a higher priority. The occupants 164 may determine the suitable restaurants and store the preferences in the memory of the controller 128.

The controller 128 may also include the internet-transceiver 150 that updates the digital-map 130 with stop-facility-information 170 and prioritizes the stop-facilities 162 at which to stop the host-vehicle 112 based on a restroom-availability 174. The controller 28 may be programmed with the restroom preferences for the occupants 164 of the host-vehicle 112 in order to prioritize the restroom-availability 174 (e.g. restrooms that accommodate special-needs for disabled persons).

The controller 128 may also include a voice-recognition-device 158 and the operator 116 selects the stop-facility 162 using a verbal-command 160. The voice-recognition-device 158 may be any of the known voice-recognition-devices 158 suitable for automotive applications.

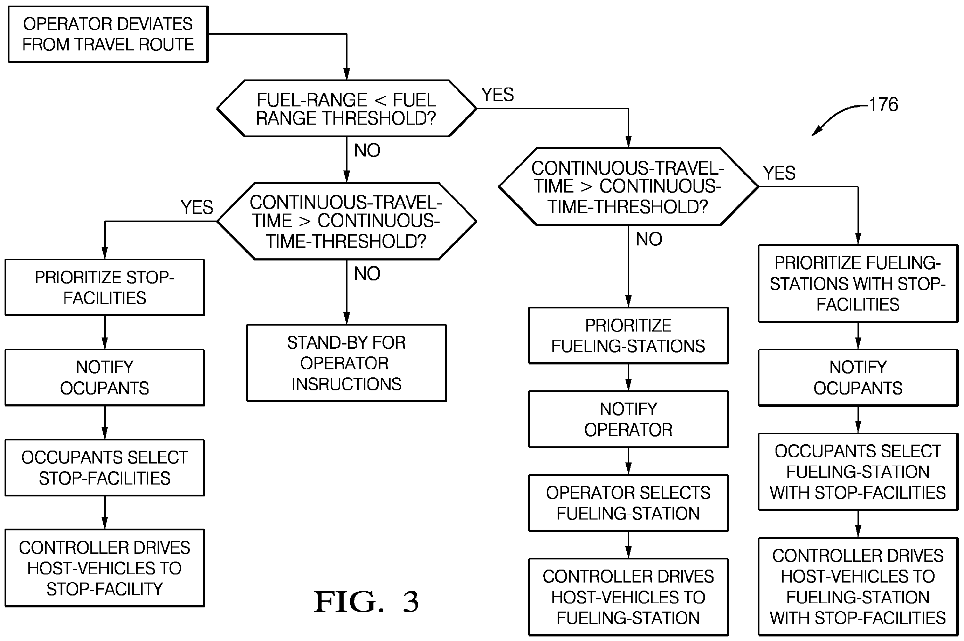

Fig. 3 illustrates a flow chart 176 of an operation of the systems shown in Figs. 1 and 2. A decision-logic may be initiated in the controller 28 when the operator 16 deviates from the travel-route 32. The controller 28 prioritizes the fueling-stations 34 and prioritizes the stop-facilities 162 and may notify 40 the operator 16 and/or may notify 140 the occupants 164 of the available fueling-stations 34 and stop-facilities 162. The operator 16 may select 48 the fueling-station 34 and/or the occupants 164 may select 148 the stop-facility 162 and the controller 28 drives to host-vehicle 12 to the selection based on the decision-logic.

Accordingly, a vehicle-control system 10, and a controller 28 for the vehicle-control system 10 is provided. The vehicle-control system 10 enables the operator 16 of the host-vehicle 12 to override the destination in a narrow time window so that the controller 28 may drive the host-vehicle 12 to the fueling-station 34 based on the fuel-price 54 and the fuel-type-availability 56.

While this invention has been described in terms of the preferred embodiments thereof, it is not intended to be so limited, but rather only to the extent set forth in the claims that follow.

## Claims

1. A route-planning system (10) suitable for use on an automated vehicle, said system (10) comprising:
a digital-map (30) used to define a travel-route (32) of a host-vehicle (12) traveling to a destination, wherein the digital-map (30) identifies a plurality of fueling-stations (34) along the travel-route (32); and
a controller (28) in communication with the digital-map (30), said controller (28) determines a fuel-range (36) of the host-vehicle (12), wherein, when an operator (16) of the host-vehicle (12) causes the host-vehicle (12) to deviate from the travel-route (32) and the fuel-range (36) is less than a fuel-range-threshold (38), the controller (28) notifies (40) the operator (16) of the host-vehicle (12) of a fueling-station (34) available to refuel the host-vehicle (12), and the controller (28) drives the host-vehicle (12) to the fueling-station (34) when the operator (16) selects the fueling-station (34).

2. The system (10) in accordance with claim 1, wherein the controller (28) further includes an internet-transceiver (50) that updates the digital-map (30) with fueling-station-information (52) and prioritizes the fueling-stations (34) at which to refuel the host-vehicle (12) based on a fuel-price (54).

3. The system (10) according to claim 1, wherein the controller (28) further includes an internet-transceiver (50) that updates the digital-map (30) with fueling-station-information (52) and prioritizes the fueling-stations (34) at which to refuel the host-vehicle (12) based on a fuel-type-availability (56).

4. The system (10) according to any one of the preceding claims, wherein the controller (28) includes a voice-recognition-device (58) and the operator (16) selects the fueling-station (34) using a verbal-command (60).

5. A route-planning system (110) suitable for use on an automated vehicle, said system (110) comprising:
a digital-map (130) used to define a travel-route (132) of a host-vehicle (112) traveling to a destination, wherein the digital-map (130) identifies a plurality of stop-facilities (162) along the travel-route (132); and
a controller (128) in communication with the digital-map (130), said controller (128) determines a continuous-travel-time (166) of the host-vehicle (112), wherein, when an operator (116) of the host-vehicle (112) causes the host-vehicle (112) to deviate from the travel-route (132) and the continuous-travel-time (166) is greater than a continuous-time-threshold (168), the controller (128) notifies (140) an occupant (164) of the host-vehicle (112) of an available stop-facility (162), and the controller (128) drives the host-vehicle (112) to the available stop-facility (162) when the occupant (164) selects the available stop-facility (162).

6. The system (110) in accordance with claim 5, wherein the controller (128) further includes an internet-transceiver (150) that updates the digital-map (130) with stop-facility-information (170) and prioritizes the stop-facilities (162) at which to stop the host-vehicle (112) based on a restaurant-availability (172).

7. The system (110) according to claim 5, wherein the controller (128) further includes an internet-transceiver (150) that updates the digital-map (130) with stop-facility-information (170) and prioritizes the stop-facilities (162) at which to stop the host-vehicle (112) based on restroom-availability (174).

8. The system (110) according to any one of the claims 5 to 7, wherein the controller (128) includes a voice-recognition-device (158) and the occupant (164) selects the stop-facility (162) using a verbal-command (160).
